# EUROPEAN PATENT SPECIFICATION

(11) **EP 3 180 471 B1**
(45) Date of publication and mention of the grant of the patent: **13.11.2019**
(21) Application number: 15739612.8
(22) Date of filing: 22.07.2015
(51) Int. Cl.: D07B 1/02

(54) **TOW CABLE**
ABSCHLEPPSEIL
CÂBLE DE REMORQUAGE

(30) Priority: 14.08.2014 GB 201414476
(43) Date of publication of application: 21.06.2017
(73) Proprietor: LEONARDO MW LTD, Basildon, Essex SS14 3EL (GB)
(72) Inventor: LYE, David, Basildon Essex SS14 3EL (GB)
(74) Representative: Tolfree, Adam Joseph Benjamin
(86) International application number: PCT/EP2015/066791
(87) International publication number: WO 2016/023723

(56) References cited:
- EP-A2- 2 518 208
- WO-A1-2004/049030
- WO-A1-2009/026730
- JP-A- H11 181 688
- US-A- 5 042 903
- US-A1- 2013 319 565
- US-A1- 2014 196 596
- B. OZGEN: "Physical properties of Kevlar and Nomex plied and covered yarns", TEXTILE RESEARCH JOURNAL, vol. 83, no. 7, 9 November 2012 (2012-11-09), pages 752-760, XP055211813, ISSN: 0040-5175, DOI: 10.1177/0040517512464293

## Description

The invention relates to a tow cable and mechanism. More specifically it relates to a tow cable and mechanism for towed decoy deployed from a fast jet.

One of the techniques used to protect military aircraft against missile attack is a decoy that is towed behind the aircraft using a specialist tow cable. Due to the high performance of these aircraft, and the very significant vortex created by the wings during high 'g' manoeuvres, (particularly a delta wing), the correct cable properties are fundamental in enabling a long endurance tow capability.

The flight performance of a towed decoy is linked to the aerodynamic design of the decoy, which focuses on the relative positions of the centres of pressure and mass. With a highly stable decoy, the decoy centre of mass follows the tow cable. In a very high vortex environment however, the axis of the decoy can achieve significant deviation with respect to the axis of the cable, typically up to a cone angle of 90°. In this environment, cable fibres experience significant relative movement. This relative movement causes self-fretting of the individual fibres, and hence a gradual degradation of strength as individual fibres fracture. Man-made fibres such as Kevlar have a very high strength to weight ratio, but this chemistry does not provide a long endurance tow cable as Kevlar has high inter fibre friction. In this application this leads to fretting failure.

WO2004/049030 relates to electro-optical cables for use with towed decoys comprising a glass-fibre core, a medial cushioning layer and an outer hard shell that surrounds the medial cushioning layer.

According to the invention there is provided a decoy deployment system according to claim 1, especially for a high speed aircraft.

The low friction internal fibres of the cable provide the high endurance strength members necessary for successful operation of the cable.

In this way, the tow cable of the invention overcomes the problems associated with prior art tow cables, principally the early and uncommanded detachment of the decoy caused by the tow cable breaking. Unpredictable performance of such equipment can lead to limitations in operational use or the carriage of multiple decoys to protect against such events.

The invention will now be described with reference to the following drawings in which:
Figure 1 is a schematic drawing of a decoy and tow cable deployed behind an aircraft in accordance with one form of the invention. The tow point is located sufficiently away from the engines and flight control surfaces, such that only aerodynamic forces are impressed upon the tow cable structure and decoy. The diagram is necessarily not to scale but indicates the general arrangement.
Figure 2 is a schematic drawing of a cross section of the tow cable of Figure 1 in accordance with one form of the invention.

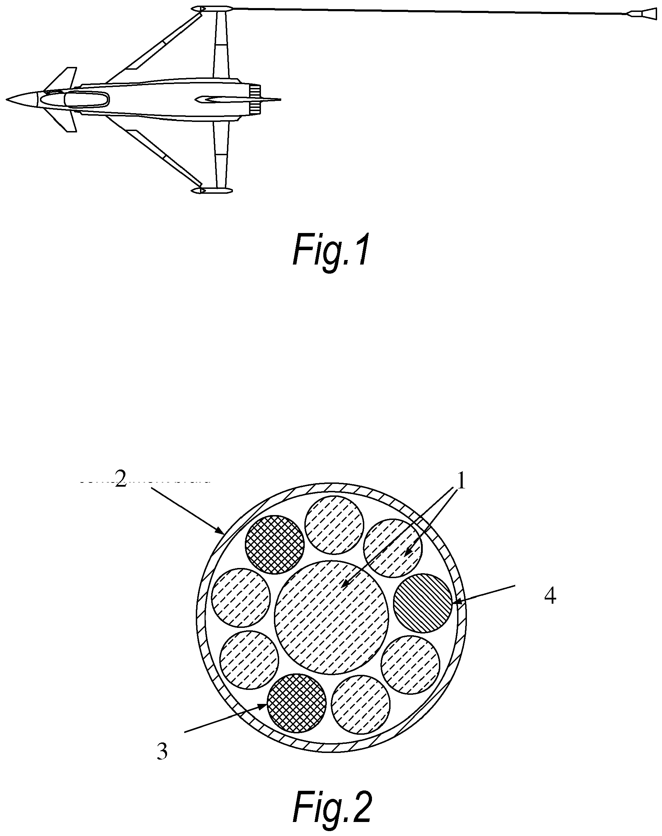

Figure 2 shows one form of tow cable in accordance with the invention. The tow cable comprises a series of internal fibre bundles produced from low frictional fibres, surrounded by (and contained by) an external braid produced from a high frictional fibre material. The tow cable may further include integral electrical and optical fibre conductors as required for the operation of the decoy. Manmade fibres using liquid crystal polymer technology can provide fibres with the necessary high and low friction properties. Lyotropic LCPs, such as Kevlar(RTM), can provide the high friction fibres, whilst thermotropic LCPs such as Vectran (RTM), can provide the low friction fibres.

In this way, the tow cable can withstand the extreme inter-fibre dynamics as well as the tensile loads needed for towing a high drag body such as a towed decoy. The critical characteristic is low inter-fibre friction that minimises cable self-fretting which is the cause of cable failure under these conditions. Such low friction characteristics minimise fibre-on-fibre damage and hence prolong cable life.

A tow cable with this structure can typically provide hours of towing capability, with complex flight profiles comprising high 'g' manoeuvres, high aircraft speed excursions such as 350 knots to supersonic speeds, and low drag conditions as experienced during in-flight refuelling. This invention has identified a tow cable composite structure and fibre chemistry which enables a high endurance tow cable for use in a severe vortex aero environment. It will be appreciated that whilst that whilst the specific examples of Kevlar (RTM) and Vectran (RTM) fibres are given above, any suitable combination of materials having the desired properties may be used.

### List of reference signs:

(1) Low friction strength fibre bundles
(2) High friction outer containment braid
(3) Electrical conductors
(4) Optical fibre

## Claims

1. A decoy deployment system comprising:
a towed decoy deployment mechanism for controlling the deployment of a decoy from an aircraft,
a tow cable adapted to be deployed via the towed decoy deployment mechanism;
**characterised in that** the tow cable comprises a fibre core surrounded by an outer fibre sheath (2), the frictional coefficients of the fibre materials comprising the core and the sheath being selected such that the fibre material comprising the outer sheath (2) has a higher frictional coefficient relative to the frictional coefficient of the material comprising the inner core;
the frictional coefficient of the fibre material of the outer sheath (2) being compatible with the deployment mechanism enabling said controlled deployment of the decoy

2. A decoy deployment system according to claim 1 in which the core comprises a series of interwoven fibres.

3. A decoy deployment system according to claim 1 or 2 in which the outer sheath material comprises a braiding comprising a material having a relatively higher fibre frictional coefficient material than the material comprising the fibre core.

4. A decoy deployment system according to any preceding claim in which the core further comprises electrical conductors (3) and optical fibre cables (4).

5. A decoy deployment system according to any preceding claim in which the core strength fibre material is a thermotropic LCP.

6. A decoy deployment system according to any preceding claim in which the outer braid material is a lyotropic LCP.

## Patentansprüche

1. Täuschkörpereinsatzsystem, umfassend
einen Schlepptäuschkörpereinsatzmechanismus zum Steuern des Einsatzes eines Täuschkörpers von einem Luftfahrzeug,
ein Schleppkabel, das zum Einsatz über den Schlepptäuschkörpereinsatzmechanismus ausgebildet ist;
**dadurch gekennzeichnet, dass** das Schleppkabel einen Faserkern umfasst, der von einem äußeren Fasermantel (2) umgeben ist, wobei die Reibungskoeffizienten der Fasermaterialien, die der Kern und der Mantel umfassen, derart gewählt ist, dass das Fasermaterial, das der äußere Mantel (2) umfasst, einen höheren Reibungskoeffizienten relativ zu dem Reibungskoeffizienten des Materials aufweist, das der innere Kern umfasst;
wobei der Reibungskoeffizient des Fasermaterials des äußeren Mantels (2) mit dem Einsatzmechanismus verträglich ist, wodurch der gesteuerte Einsatz des Täuschkörpers ermöglicht wird.

2. Täuschkörpereinsatzsystem nach Anspruch 1, wobei der Kern eine Reihe von miteinander verwobenen Fasern umfasst

3. Täuschkörpereinsatzsystem nach Anspruch 1 oder 2, wobei das Material des äußeren Mantels eine Litze enthält, die ein Material umfasst, das einen relativ höheren Fasermaterialreibungskoeffizienten als das Material aufweist, das der Faserkern umfasst.

4. Täuschkörpereinsatzsystem nach einem der vorhergehenden Ansprüche, wobei der Kern ferner elektrische Leiter (3) und Faseroptikkabel (4) umfasst.

5. Täuschkörpereinsatzsystem nach einem der vorhergehenden Ansprüche, wobei das Kernfestigkeitsfasermaterial ein thermotropes LCP ist.

6. Täuschkörpereinsatzsystem nach einem der vorhergehenden Ansprüche, wobei das äußere Litzenmaterial ein lyotropes LCP ist.

## Revendications

1. Système de déploiement de leurre comprenant :
un mécanisme de déploiement de leurre remorqué destiné à commander le déploiement d'un leurre à partir d'un aéronef,
un câble de remorquage adapté pour être déployé par l'intermédiaire du mécanisme de déploiement de leurre remorqué ;
**caractérisé en ce que** le câble de remorquage comprend une âme de fibres entourée par une gaine de fibres extérieure (2),
les coefficients de frottement des matériaux de fibres comprenant l'âme et la gaine, étant sélectionnés de telle sorte que le matériau de fibres comprenant la gaine extérieure (2) présente un coefficient de frottement supérieur au coefficient de frottement du matériau comprenant l'âme intérieure ;
le coefficient de frottement du matériau de fibres de la gaine extérieure (2) étant compatible avec le mécanisme de déploiement permettant ledit déploiement commandé du leurre.

2. Système de déploiement de leurre selon la revendication 1, dans lequel l'âme comprend une série de fibres entrelacées.

3. Système de déploiement de leurre selon la revendication 1 ou 2, dans lequel le matériau de gaine extérieure comprend un tressage comprenant un matériau présentant un matériau à coefficient de frottement de fibres plus élevé que le matériau comprenant l'âme de fibres.

4. Système de déploiement de leurre selon l'une quelconque des revendications précédentes, dans lequel l'âme comprend en outre des conducteurs électriques (3) et des câbles de fibres optiques (4).

5. Système de déploiement de leurre selon l'une quelconque des revendications précédentes, dans lequel le matériau de fibres résistant de l'âme est un LCP thermotrope.

6. Système de déploiement de leurre selon l'une quelconque des revendications précédentes, dans lequel le matériau de tresse extérieure est un LCP lyotrope.
